# EUROPEAN PATENT APPLICATION

(11) **EP 2 953 021 A1**
(43) Date of publication of application: **09.12.2015**
(21) Application number: 15169348.8
(22) Date of filing: 27.05.2015
(51) Int. Cl.: G06F 9/44, G06F 11/36

(54) **METHOD AND SYSTEM FOR IMPLEMENTING SOFTWARE REQUIREMENTS**

(30) Priority: 03.06.2014 US 201414294225
(71) Applicant: Hamilton Sundstrand Corporation, Charlotte, NC 28217 (US)
(72) Inventor: LEIBHAM, Terrence R., St. Charles, IL Illinois 60175 (US); KRENZ, Michael, Roscoe, IL Illinois 61073 (US); SCHMIDT, Jeffery S., Rockton, IL Illinois 61072 (US); KEATON, Lucas, Rockford, IL Illinois 61114 (US); WARNER, Shawn A., Winnebago, IL Illinois 61088 (US); BELLIS, Andrew David, Rockford, IL Illinois 61107 (US); RADULESCU, Gabriel, Loves Park, IL Illinois 61111 (US); HENDRY, Michael J., Roscoe, IL Illinois 61073 (US); FISCHER, Jeff M., DeKalb, IL Illinois 60115 (US)
(74) Representative: Hughes, Andrea Michelle

(57) **Abstract**

A method for incorporating a set of requirements into an executable program to be run on an airborne system is provided. The method obtains the set of requirements for the program in a first format. The method uses a first tool to convert the set of requirements in the first format into a second format utilizing a markup language. The method uses a second tool to convert the set of requirements in the second format into a third format that influences a behavior of the program without changing the program. The method uses a third tool to determine whether the set of requirements in the third format incorporates all of the set of requirements in the second format in order to verify the program under a compliance standard for the airborne system without performing a verification process directly on the program.

## Description

### BACKGROUND OF THE INVENTION

The Federal Aviation Administration, jointly with the European Organisation for Civil Aviation Equipment, publishes documents (e.g., DO-178C "Software Considerations in Airborne Systems and Equipment Certification") that specify a compliance standard, which software used in airborne systems must meet. Conventional development processes for software used in airborne systems require rigorous testing processes in order for the software to meet the compliance standard. Also, when the software is modified (e.g., to update a feature or logic), the modified portion of the software must be tested and the other unmodified portions of the software also have to go through regression testing, in order for the software to meet the compliance standard. If even a few lines of the source code for the software are changed, several tens of testing cases must be written and run on those few lines.

Today's developers of software that is used in airborne systems receive modification requests very frequently to add, remove, or alter the features or logics of the software to meet the clients' needs. Incorporating these modification requests into the software, therefore, may take long and be very costly for the reasons discussed above.

### BRIEF DESCRIPTION OF THE INVENTION

According to an embodiment of the present invention, a method for incorporating a set of requirements into an executable program to be run on an airborne system is provided. The method obtains the set of requirements for the program in a first format. The method uses a first tool to convert the set of requirements in the first format into a second format utilizing a markup language. The method uses a second tool to convert the set of requirements in the second format into a third format that influences a behavior of the program without changing the program. The method uses a third tool to determine whether the set of requirements in the third format incorporates all of the set of requirements in the second format in order to verify the program under a compliance standard for the airborne system without performing a verification process directly on the program.

According to another embodiment of the present invention, a system for incorporating a set of requirements into an executable program to be run on an airborne system is provided. The system comprises a first module configured to obtain the set of requirements for the program in a first format and to convert the set of requirements in the first format into a second format utilizing a markup language. The system comprises second module configured to convert the set of requirements in the second format into a third format that influences a behavior of the program without changing the program. The system comprises a third module configured to determine whether the set of requirements in the third format incorporates all of the set of requirements in the second format in order to verify the program under a compliance standard for the airborne system without performing a verification process directly on the program.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a block diagram of a verification system in accordance with exemplary embodiments of the invention;
FIG. 2 is a flowchart illustrating a process for verifying a set of requirements to be incorporated into a software tool in accordance with exemplary embodiments of the invention; and
FIG. 3 depicts a model generated by using a model-based design tool in accordance with exemplary embodiments of the invention.

### DETAILED DESCRIPTION OF THE INVENTION

Some embodiments of the invention provide methods and systems that facilitate fast and cost-effective modification of a software tool that is to be installed and run on airborne systems. Specifically, the methods and systems incorporate a set of modification requests by converting the requirements into a data format that can be used to control the software tool instead of directly modifying the software tool to incorporate the modification requirements. The method and systems then perform verification processes on the requirements in this data format to meet a compliance standard, and thereby avoid performing long and costly verification processes on the software tool.

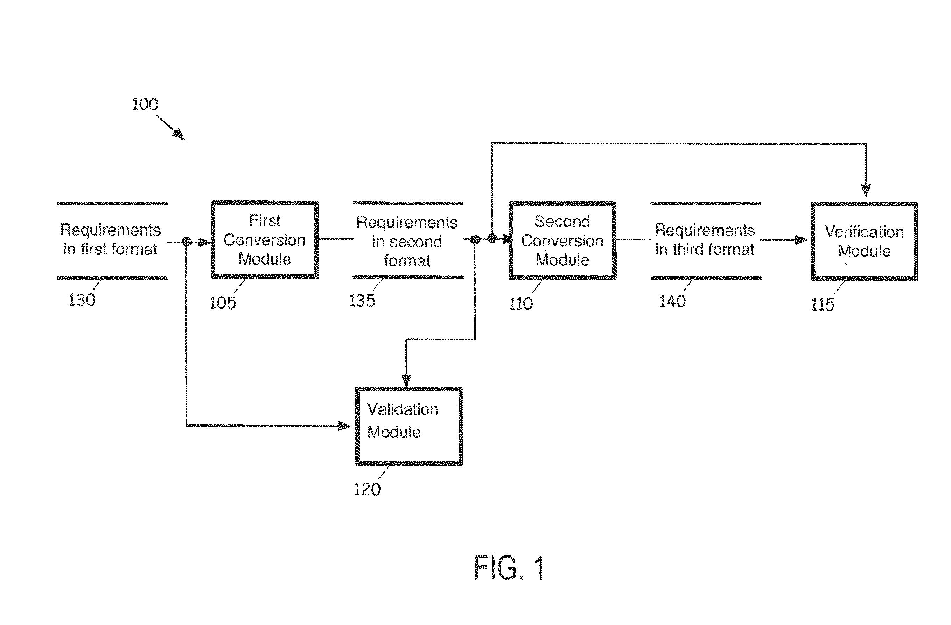

FIG. 1 depicts a block diagram of a verification system 100 in accordance with some embodiments of the invention. The verification system 100 includes a first conversion module 105, a second conversion module 110, a verification module 115, and a validation module 120.

The first conversion module 105 takes as inputs a set of requirements in a first format 130, converts the set of requirements in the first format into a second format, and outputs the set of requirements in the second format 135. In some cases, the set of requirements 130 specifies how a software tool (e.g., an executable program), which is to be installed and run on an airborne system (e.g., a passenger airplane), should be modified. For example, the set of requirements 130 may specify a feature or logic to be added to or removed from the software tool or how a feature or logic of the software should be changed. Typically, the software tool is for controlling various different sub-systems of the airborne system - e.g., an electric power system, a lighting system, a hydraulic system, an air circulation system, etc.

In some cases, a user prepares the set of requirements 130 using a model-based design tool. A model-based design tool allows a user to specify the inputs and outputs of features or logics of the software tool as a model. Examples of a model-based design tool include Simulink, Modelica, MapleSim, etc. In some embodiments, therefore, the first format in which the set of requirements 130 is received is a format of the output of the model-based design tool used by the user.

The first conversion module 105 coverts the set of requirements in the first format 130 into the second format. In some embodiments, the set of requirements in the second format 135 is formatted in a markup language that is both human-readable and machine-readable, such as an Extensible Markup Language (XML). In some embodiments, a XML Schematic Definition is created for the first conversion module 105.

In some embodiments, because the second format is a human-readable format, the set of requirements in the second format 135 may be validated against the set of requirements in the first format by a user via the validation module 120. The validation module 120 of these embodiments may be a tool (e.g., a web browser, a text viewer/editor) that is capable of displaying the set of requirements in the second format to allow a user who provides the set of requirements in the first format 130 to inspect and validate the set of requirements in the second format 135. The user determines whether the set of requirements in the second format 135 correctly specifies one or more features of the software tool that are specified in the set of requirements in the first format 130, using the validation module 120. In other embodiments, the validation module 120 may be configured to perform a validation process on the set of requirements in the second format.

The set of requirements in the second format 135 may be supplied to the second conversion module 110 and the verification module 115, which are designed and configured to use the set of requirements in the second format 135. The second conversion module 110 and the verification module 115 do not have to be redesigned or reconfigured for a change of the first format. Only the first conversion module 105 may need to be designed or configured to use different first formats.

The second conversion module 110 takes as inputs the set of requirements in the second format 135, converts the set of requirements in the second format 135 into a third format, and outputs the set of requirements in the third format 140. In some embodiments, the third format is a format that influences a behavior of software tool without modifying the software tool. That is, the software tool does not have to be redesigned or reconfigured to perform features specified in the set of requirements but takes the set of requirements in the third format as inputs and performs the features. The third format may be a format that is defined in a compliance standard, which the software tool must meet. The compliance standard specifies rules for verifying data in the third format that are different than rules for verifying features or logics of a software tool. Examples of the third format include a parameter data item (PDI) format.

The verification module 115 takes as inputs the set of requirements in the third format 140 and the set of requirements in the second format 135. The verification module 115 verifies the set of requirements in the third format 140. That is, the verification module 115 determines whether the set of requirements in the third format 140 incorporate all of the requirements captured in the set of requirements in the second format 135. Specifically, in some embodiments, the verification module 115 converts the set of requirements in the third format 140 back to the second format by reversing the process of converting the requirements in the second format to the third format. The verification module 115 compares the result of conversion from the third format to the second format with the set of requirements in the second format received from the second conversion module 110. In some embodiments, the verification module 115 also ensures that the software tool executes in a deterministic fashion (i.e., without having any randomness in execution).

In some embodiments, the verification module 115 is designed and tested to meet the compliance standard. Therefore, if the set of requirements in the third format 140 is verified by the verification module 115, the software tool influenced by the set of requirements in the third format 140 is also deemed to meet the compliance standard. Therefore, the developer of the software tool does not have to have the software tool go through a long and costly verification process, which the software would have had to go through if the software tool were to be modified to incorporate the set of requirements directly. That is, numerous test cases that have to be written and run against the software tool are not necessary because the software tool is deemed compliant when the set of requirement in the third format is verified instead.

As used herein, the terms module and sub-module may refer to an application specific integrated circuit, an electronic circuit, a processor (shared, dedicated, or group) and memory that executes one or more software or firmware programs, or a combinational logic circuit in a system. For example, in some embodiments, the modules 105-120 may be communicatively connected (e.g., through a bus) to a memory to store and retrieve data such as the set of requirements in the first format 130, the set of requirements in the second format 135, and the set of requirements in the third format 140. The modules 105-120 may also use a processor to perform their operations. The modules 105-120 may also be communicatively connected to a network interface to exchange data with other systems. The modules 105-120 may also be communicatively connected to a display device to render the data visually. The bus, the memory, the processor, the network interface and the display device are not depicted in FIG. 1 for the simplicity of illustration and description.

In some embodiments, the modules 105-120 may be combined or further partitioned. Also, the modules 105-120 may be implemented in more than one machine in a distributed fashion. That is, the verification system 100 may be implemented in more than one machine in a distributed fashion.

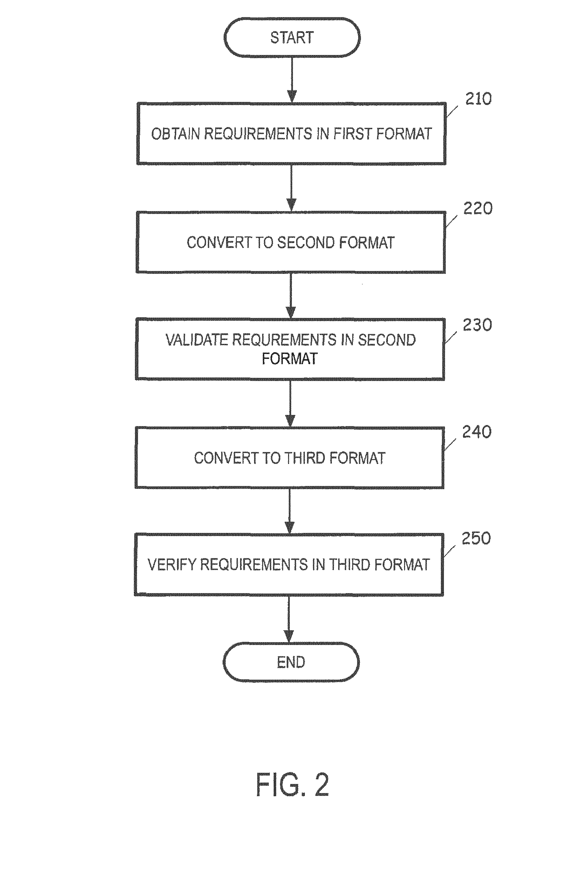

An example operation of the verification system 100 will now be described by reference to FIGS. 1 and 2. FIG. 2 is a flowchart illustrating a process for incorporating a set of requirements to a software tool. In some embodiments, the process shown in FIG. 2 is performed by the verification system 100.

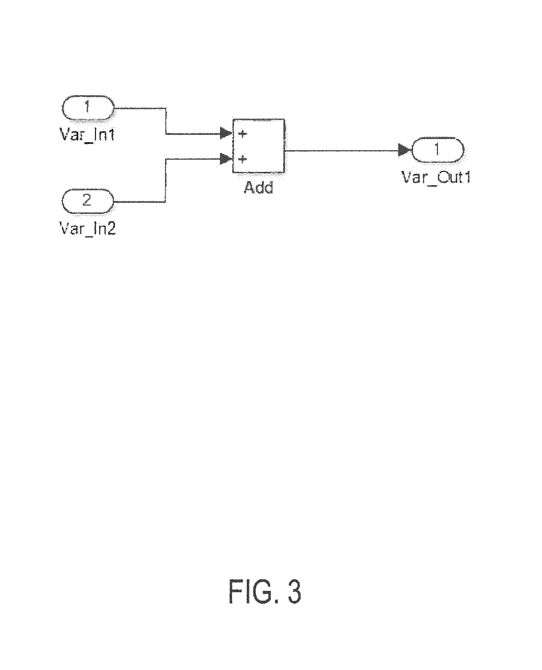

At block 210, the verification system 100 obtains the set of requirements in the first format 130. An example of the set of requirements in the first format 130 is shown in FIG. 3. The example shown in FIG. 3 is a simple routine that could be part of a feature or logic specified by the set of requirements. As shown, this simple routine is prepared by a model-based design tool, graphically showing the inputs ("Var_In1" and "Var_In2") and outputs ("Var_Out1") of this simple routine ("Add").

At block 220, the verification system 100 converts the set of requirements in the first format 130 into the second format to generate the set of requirements in the second format 135. The following XML segment is an example of the set of requirement in the second format 135:

```
             <?xml version="1.0" encoding="utf-8"?>
             <LOGIC_PDI xmlns:xsi="http://www.w3.org/2001/XMLSchema-instance"
             xsi:noNamespaceSchemaLocation=" ">
                    <LOGIC_DEFINITION>
                            <NAME>Sample _Model</NAME>
                    <INPORT>
                            <NAME>Var_In1 </NAME>
                            <PORT_NUMBER>1</PORT_NUMBER>
                    </INPORT>
                    <INPORT>
                            <NAME>Var_In2</NAME>
                            <PORT_NUMBER>2</PORT_NUMBER>
                    </INPORT>
                    <OUTPORT>
                           <NAME>Var_Out1 </NAME>
                           <PORT_NUMBER>1</PORT_NUMBER>
                    </OUTPORT>
                    <OPERATION>
                           <NAME>Sample _Model</NAME>
                           <SID>aDAP_Sample_Model:3</SID>
                           <REQUIREMENT/>
                           <SUM>
                                   <SUM_STRING>++</SUM_STRING>
                                   <INPUT>
                                          <NAME/>
                                          <INPORT>
                                                 <NAME>Var_ln1 </NAME>
                                          </INPORT>
                                  </INPUT>
                                  <INPUT>
                                          <NAME/>
                                          <INPORT>
                                                 <NAME>Var_In2</NAME>
                                          </INPORT>
                                  </INPUT>
                           </SUM>
                           <OP_OUTPUT>
                                  <NAME>Var_Out1 </NAME>
                                  <GLOBAL>false</GLOBAL>
                           </OP_OUTPUT>
                           </OPERATION>
                    </LOGIC_DEFINITION>
             </LOGIC_PDI>
```

This XML segment results from converting the simple routine model shown in FIG. 3. In some embodiments, a XML Schematic Definition is created for the verification system 100.

At block 230, the verification system 100 allows a user to validate the set of requirements in the second format 135 against the set of requirements in the first format 130. The verification system 100 may display the set of requirements in the second format 135 so that the user can validate the set of requirements in the second format 135 by determining whether the set of requirements in the second format 135 correctly specify the features specified in the set of requirements in the first format (i.e., whether the features are altered during conversion from the first format to the second format).

At block 240, the verification system 100 converts the set of requirements in the second format 135 into the third format to generate the set of requirements in the third format 140. The following PDI segment is an example of the set of requirements in the third format 140. This PDI segment results from converting the above XML segment into the third format:
Fetch 1 # Var_In1
Fetch 2 # Var_In2
Add
Store 1 # Var_Out1

At block 250, the verification system 100 verifies the set of requirements in the third format 140 by determining whether all of the set of requirements in the second format 135 have been converted to the third format. Specifically, in some embodiments, the verification tool 100 converts the set of requirements in the third format 140 back to the second format by reversing the process of converting the requirements in the second format to the third format. The verification system 100 compares the result of conversion from the third format to the second format with the set of requirements in the second format 135 generated at block 220.

Once verified, the set of requirements in the third format 140 are provided to the software tool. The software tool subsequently implements the logic specified in the requirements in the third format.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the invention has been described in detail in connection with only a limited number of embodiments, it should be readily understood that the invention is not limited to such disclosed embodiments. Rather, the invention is only limited by the scope of the appended claims.

## Claims

1. A method for incorporating a set of requirements into an executable program to be run on an airborne system, the method comprising:
obtaining the set of requirements for the program in a first format;
using a first tool to convert the set of requirements in the first format into a second format utilizing a markup language;
using a second tool to convert the set of requirements in the second format into a third format that influences a behavior of the program without changing the program; and
using a third tool to determine whether the set of requirements in the third format incorporates all of the set of requirements in the second format in order to verify the program under a compliance standard for the airborne system without performing a verification process directly on the program.

2. The method of claim 1 further comprising allowing a user to determine whether the set of requirements in the second format correctly specifies one or more features of the program that are specified in the set of requirements in the first format.

3. The method of claim 1, wherein the third tool is verified under the compliance standard.

4. The method of claim 1, wherein the third tool is configured to convert the set of requirements in the third format back to the second format.

5. The method of claim 1, further comprising:
using the third tool to ensure that the program executes in a deterministic fashion.

6. The method of claim 1, wherein the set of requirements in the first format is a model produced by a user by using a model-based design tool.

7. The method of claim 1, wherein the second format comprises an Extensible Markup Language (XML) format.

8. The method of claim 7, further comprising:
creating an XML Schematic Definition for the first tool to use.

9. The method of claim 1, wherein the third format comprises a parameter data items (PDI) format.

10. A system for incorporating a set of requirements into an executable program to be run on an airborne system, the system comprising:
a first module (105) configured to obtain the set of requirements for the program in a first format and to convert the set of requirements in the first format into a second format utilizing a markup language;
a second module (110) configured to convert the set of requirements in the second format into a third format that influences a behavior of the program without changing the program; and
a third module (115) configured to determine whether the set of requirements in the third format incorporates all of the set of requirements in the second format in order to verify the program under a compliance standard for the airborne system without performing a verification process directly on the program.

11. The system of claim 10, further comprising:
a fourth module (120) configured to allow a user to determine whether the set of requirements in the second format correctly specifies one or more features of the program that are specified in the set of requirements in the first format.

12. The system of claim 10, wherein the third module is verified under the compliance standard.

13. The system of claim 10, wherein the third tool is further configured to convert the set of requirements in the third format back to the second format.

14. The system of claim 10, wherein the third tool is further configured to ensure that the program executes in a deterministic fashion.

15. The system of claim 10, wherein the third format comprises a parameter data items (PDI) format.
